# EUROPEAN PATENT APPLICATION

(11) **EP 1 108 865 A2**
(43) Date of publication of application: **20.06.2001**
(21) Application number: 00310309.0
(22) Date of filing: 20.11.2000
(51) Int. Cl.: F01N 3/28, F01N 3/20

(54) **Catalyst construction for treating lean burn engine exhaust**

(30) Priority: 13.12.1999 US 602663
(71) Applicant: Ford Global Technologies, Inc., Dearborn, Michigan 48126 (US)
(72) Inventor: Rao, V. Durga Nageswar, Bloomfield Twp, Michigan 48103 (US); Cikanek, Harry Arthur, Northville, Michigan 48167 (US); Watkins, William Lewis Henderson, Toledo, Ohio 43607 (US)
(74) Representative: Messulam, Alec Moses

(57) **Abstract**

An exhaust purification device for a fossil fuelled engine, comprising a series of alternately blocked laminar flow channels (42) defining inlet sections, cross-flow sections, and exit sections. The flow channels have porous (foraminous) walls (45) and a predetermined hydraulic diameter. The device also has a plurality of NOₓ reacting pellets (55) packing at least certain of the inlet sections of the channels (42); the pellets have a diameter generally approaching the hydraulic diameter and are comprised of at least dolomitic carbonate. The device has a three-way catalyst (i.e., selected Pd, Pt or Rh) coating (56) at least on the walls (45) of the outlet sections.

## Description

This invention relates to exhaust gas purification apparatus for an internal combustion engine that is capable of removing NOₓ when the engine is being operated in a lean burn condition.

Before the development of automotive catalysts to remove objectionable components in automotive exhaust, the major use of catalysts was in industrial processes. The operating conditions for these processes were selected to optimise the catalyst formation. The temperature was kept within a narrow range and the inlet gases were maintained relatively uniform and purged of catalyst poisons. Even in these cases, the catalysts had to be replaced periodically. In contrast, operating requirements for automotive catalysts are much more severe; they must operate over a wide temperature range, i.e., 200°C to 1100°C, with the inlet gases pulsating and varying widely in composition and probably containing poisons such as lead, phosphorus, and sulphur.

The development of automotive catalysts has followed the design choice for the predominant air/fuel operating conditions for the engine. In early designs, rich accelerating modes were regarded as normal, allowing a two-way catalyst (usually incorporating platinum and palladium) to convert CO and HC while using exhaust gas recirculation to drop the combustion temperature, thereby eliminating the formation of NOₓ. This resulted in less than satisfactory fuel economy. Next, the engines were designed to run predominantly at about stoichiometry to increase fuel economy. A combination of oxidising catalysts and reducing catalysts converted CO, HC, and NOₓ (often referred to as a three-way catalyst). With even greater design efforts to improve fuel economy, such as is prevalent in Europe, lean burn engines were developed where the predominant cruising mode was an air/fuel ratio greater than 16 followed by short excursions to stoichiometry during periods of acceleration. Lean and stoichiometric conditions did not favour conversion of NOₓ, even with a reducing catalyst present, particularly when the lean cruising conditions were long.

To remove such inhibition to convert NOₓwith a lean burn engine, recent developments have proposed the use of NOₓ absorbents that collect NOₓ and release it for conversion when a rich condition is temporarily mandated (for a few seconds) by an automatic controller triggered by the vehicle driver deciding to accelerate and change from lean to richer conditions, or temporarily mandated when a temperature sensor indicates the temperature of the absorbent or exhaust gas is too high (see U.S. Patents 5,423,181; 5,402,641; 5,473,887).

In a first aspect, the invention is an exhaust purification device for a fossil fuelled engine, comprising:
a) a series of alternately blocked laminar flow channels defining inlet sections, through-wall cross-flow sections, and outlet sections, the flow channels having porous walls and a predetermined hydraulic diameter; b) a plurality of NOₓ reducing pellets packing at least certain of the inlet sections of the channels, the pellets being comprised of dolomitic carbonate and having a diameter generally approaching the hydraulic diameter of the channels; and c) a three-way catalyst coating the pellets and the walls of at least one of either the outlet or inlet sections.

The invention in a second aspect is an exhaust purification system for a lean burn internal combustion engine producing an exhaust with CO, HC, and NOₓ, the engine having an air/fuel controller for providing a normal driving cycle between lean burn cruising with normal excess oxygen in the exhaust and regular acceleration with reduced excess oxygen, comprising: a) an exhaust passage; b) first walls promoting laterally interconnected inlet and outlet laminar flows in at least one region of the exhaust passage; c) second walls promoting Darcy flow within said first walls to reduce the boundary layer induced by the laminar flow and promoting Darcy flow within said lateral interconnection of said second walls containing dolomitic carbonate; and d) a conversion catalyst on the first and second walls whereby, during a normal driving cycle with the exhaust gas first having normal lean burn excess oxygen, the second walls and dolomitic carbonate absorb/adsorb NOₓ which reacts to form nitrites and nitrates which in turn are reduced by available CO, HC or O₂ to form carbonates and innocuous compounds or elements, and secondly, when the exhaust gas has reduced excess oxygen, the first walls and catalyst reduce any available nitrites to again form carbonates and innocuous compounds or elements, the driving cycle having no need for artificially pulsing the controller to produce a temporary oxygen deficient exhaust condition.

It is an advantage of an exhaust purification system for a lean burn engine embodying the invention that it does not need mandatory or temporary rich air/fuel conditions to convert NOₓ and performs with enhanced conversion efficiency. Further it provides a catalyst system with reduced precious metal loading thereby reducing the cost of manufacture but increasing the durable life of the catalyst.

The present invention will now be described further, by way of example, with reference to the accompanying drawings, in which:
Figure 1 is an overall view of an engine, with its controls, showing the integration of the purification device of this invention;
Figure 2 is a enlarged central sectional elevational view of one embodiment of the purification device of this invention;
Figure 3 is a further enlarged sectional view of a portion of the substrate taken along line 3-3 of Figure 2;
Figure 4 is an end view of the structure in Figure 2;
Figure 5 is a greatly enlarged sectional view of a portion of the cross flow wall of the substrate in Figure 2 taken along line 5-5 thereof;.
Figure 6 is a horizontal sectional view taken substantially along line 6-6 of Figure 2;
Figure 7 is a sectional elevational view of a single cell of Figure 2;
Figure 8 is a greatly enlarged sectional view of a portion of a wall membrane of the walls defining the laminar flow taken along line 8-8 of Figure 2;
Figure 9 is a central sectional elevational view of another embodiment of this invention;
Figure 10 is an enlarged sectional view taken substantially along line 10-10 of Figure 9; and
Figures 11-15 are each graphical illustrations demonstrating NOₓ conversion efficiency or NOₓ absorption as a function of air/fuel ratio or exhaust temperature.

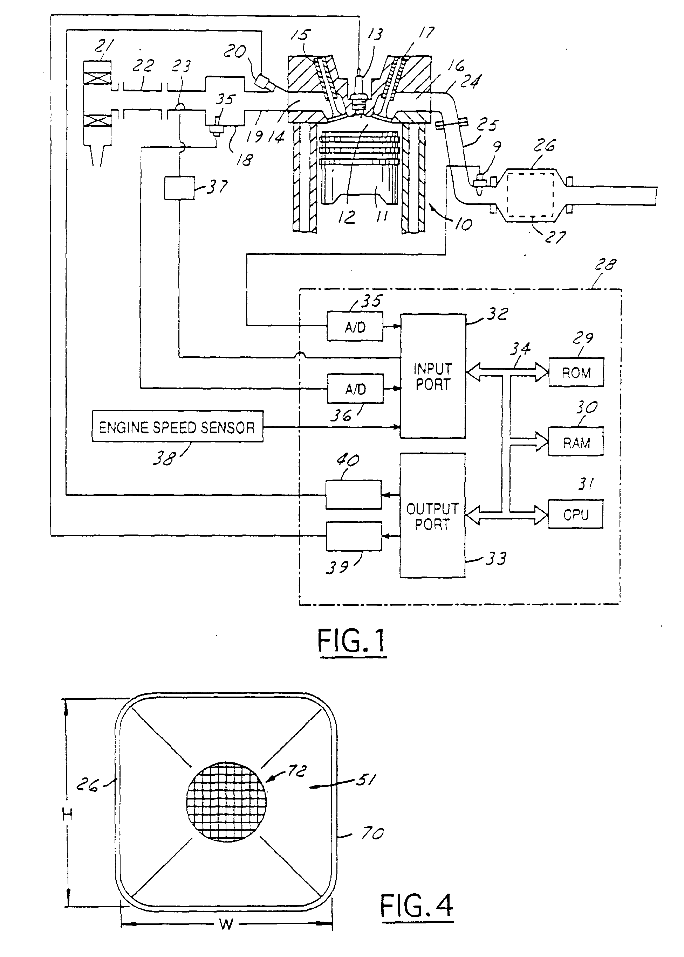

Figure 1 shows the control environment for a fossil fuelled engine 10 which affects the exhaust gas composition. The engine has a piston 11, a combustion chamber 12, a spark plug 13, an intake port 14, an intake valve 15, an exhaust port 16, and an exhaust valve 17. The intake port 14 is connected to a surge tank 18 by way of a corresponding conduit 19, and a fuel injector 20, injecting fuel toward the interior of intake port 14, which is attached to each branch conduit 19. The surge tank 18 is connected to an air cleaner 21 by way of an intake duct 22. A throttle valve 23 is disposed in the intake duct 22. The exhaust port 16 is connected by way of an exhaust manifold 24 and an exhaust pipe 25 to a casing 26 which contains the catalyst construction or exhaust gas purification device 27 that provides for both laminar and Darcy flow.

An electronic control unit 28 comprises a digital computer and is provided with a ROM (read-only memory) 29, a RAM (random access memory) 30, a CPU (microprocessor) 31, an electronic input port 32, and an electronic output port 33, which are interconnected by a bi-directional bus 34. A pressure sensor 35, producing an output voltage which is proportional to the absolute pressure in the surge tank 18, is arranged in the surge tank 18, and the output voltage of the pressure sensor 35 is put into the electronic input port 32 by way of an AD converter 36. A temperature sensor 9 generates an output voltage proportional to the exhaust temperature and is attached in the exhaust pipe 25 upstream of the casing 26; the output voltage of this temperature sensor 9 is input via the AD converter 35 to the input port 32. A throttle sensor 37 produces an output signal indicating that the degree of the opening of the throttle valve 23 is equal to the degree of opening at idling and is attached to the throttle valve 23; the output signal of the throttle sensor 37 is put into the input port 32. In addition, an engine speed sensor 38 generates an output pulse expressing the engine speed and is connected to the input port 32. The output port 33 is connected by way of corresponding driving circuits 39 and 40 to the spark plug 13 and fuel injector 20, respectively.

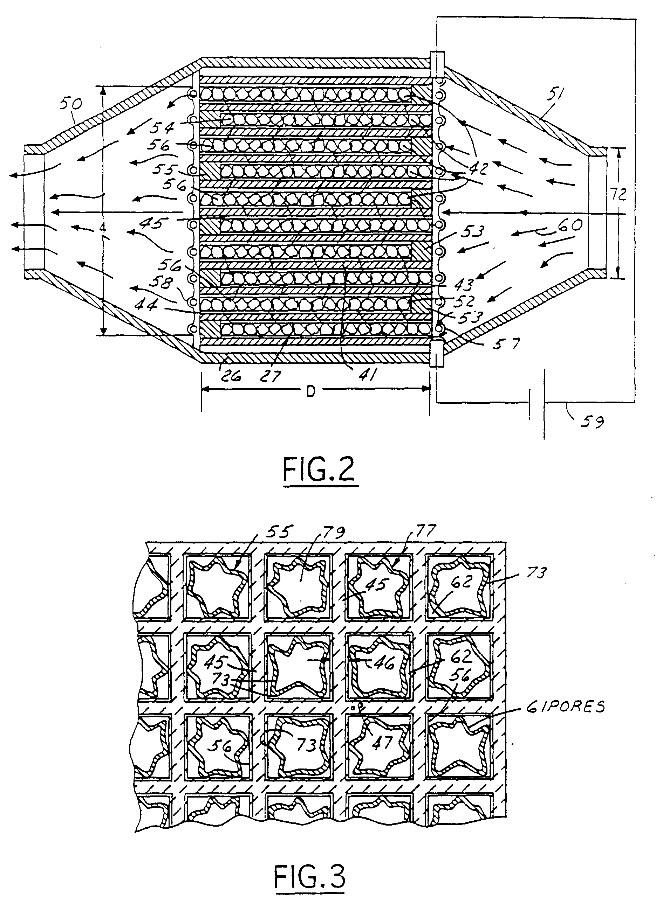

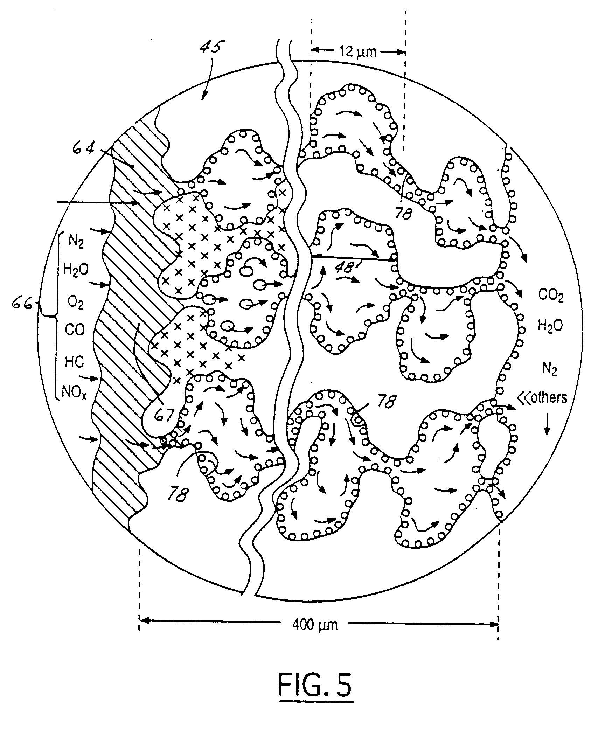

As shown in Figures 2 and 3, the exhaust gas purification device 27 comprises a foraminous ceramic substrate 41 having a plurality of parallel channels 42 extending between a front face 43 and an exit face 44. The walls 45 of the substrate defining the channels 42 have a uniform thickness 46 of about 400 microns, with the pores 47 in the walls 45 being random and irregular in shape with a mean diameter 48 of about 12 microns. The overall configuration of the substrate posses a valuable low three-dimensional aspect relationship of about 1:2:1(H/W/D in Figures 2 and 4) where H is height, W is width and D is the dimension of the substrate from the inlet face to the exit face; unit ratio of W may vary between 1.5-2.0 and D may vary between 1.0-1.5. The aspect relationship significantly contributes to the increased effectiveness of the catalyst without changing the exhaust gas back pressure through the device 27. The substrate will have a significantly increased frontal area and a significantly decreased depth to retain proper back pressure on the exhaust gas in spite of the resistance of porous pellets 55 which are packed and contained in the channel 42, as will be described later. The substrate has a short depth D that is between 1 to 2 times the height and about .5-1 times the width (W), thereby establishing essentially the same interior flow volume as is in prior art automotive catalysts, but in a manner that enhances reactivity of the gas flowing therethrough.

Substrate 41 is preferably formed of a microporous corderite monolith that is given a washcoat and a precious metal application by conventional catalyst preparation techniques. Such preparation leaves a washcoat residue or layer 56 in the pores 47 of selected walls as well as on selected channel walls 45. The substrate is supported in a closely fitting sheet metal housing (having a Fiberfrax an interior insulation layer) that is comprised of casing 26, an exit cone 50 converging to a regular diameter for the exhaust pipe 25, and an entrance cone 51 diverging from the exhaust pipe with a diameter 72. The entrance cone may be modified in shape to be closely coupled to the exhaust manifold 24, by having the periphery of diameter 72 essentially equivalent to the periphery of the exhaust manifold configuration.

The channels 42 are alternately blocked at their entrances 52 by non-porous ceramic plugs 53 to define exit channels and are blocked at alternating exits 54 by non-porous ceramic plugs to define inlet channels. Only a washcoat layer 56 is preferably applied on the exit channels to control back pressure, if needed. Exhaust gas flowing from the engine exhaust manifold 24 will enter the unblocked entrances to inlet channels 52 (those blocked only at the exits 54) and will migrate between, around and through the maze of dolomitic carbonate pellets 56 to then pass through the pores of walls 45 defining such inlet channels 52; the flow will then enter the exit channels 54 (those not blocked at the exit face 44) and leave the substrate through exit face 44. The porosity of walls 45 can range from 25-75% and preferably has pores sized in the range of 5-65 microns. Further description of the substrate is set forth in copending US application , filed on the same date as this application by the same inventors entitled Noise Attenuating Emission Converter, the disclosure of which is incorporated by reference herein.

As shown in Figure 2, NOₓ reducing pellets 55 are packed tightly within each inlet channel 52 and each exit channel 54. To retain the pellets in the respective inlet and exit channels, stainless steel wire mesh screens 57, 58 (sized such that the wires cross at intervals slightly smaller than each ceramic channel in order to secure the pellets therein, yet provide maximum flow with minimum back pressure) are tightly secured to cover the entrance and exit faces, respectively. The screen 58 is connected to an electrical circuit 59 (12V or 42V) to be selectively resistance heated (100-150 watts) and thereby act to rapidly heat the cold-start engine exhaust gases entering and passing through the screen 57; this quickly raises the exhaust gas 60 to a catalyst light-off temperature of at least 250°C. As will be described in connection with other embodiments, the porous hollow pellets can be packed in the inlet channels and/or the exit channels.

The pellets 55 are preferably hollow and porous alumina particles, prepared by being washed in warm water followed by 10-15 second etching in hydrofluoric (5% solution), followed by a washcoat 61 comprised of a NOₓ absorber and a previous metal or three-way catalyst material. The pellets are preferably etched in a hollow form to receive the precious metal loading in an amount of about 1% by weight (120 gm/ft³), which is about half that in a conventional catalyst.

The NOₓ absorber/adsorber is dolomitic carbonate which has unique properties for initiating NOₓ reduction as will be described; the precious metal crystallite deposition is preferably selected from Pt, Pd and Rh. The shape and degree of packing of the pellets must yield adequate interstitial spaces 62 between the pellets 14 and the walls 21 to permit highly modified laminar flow of the exhaust gas. In the installed state, the hollow porous pellets define interstitial spaces 62 therebetween which are, on the average, approximately 500 microns in width and provide at least about a 30% open space in the interior of the inlet channels for the modified laminar flow. The pellets 55 are packed in the channels prior to being trapped therein by the wire mesh screens.

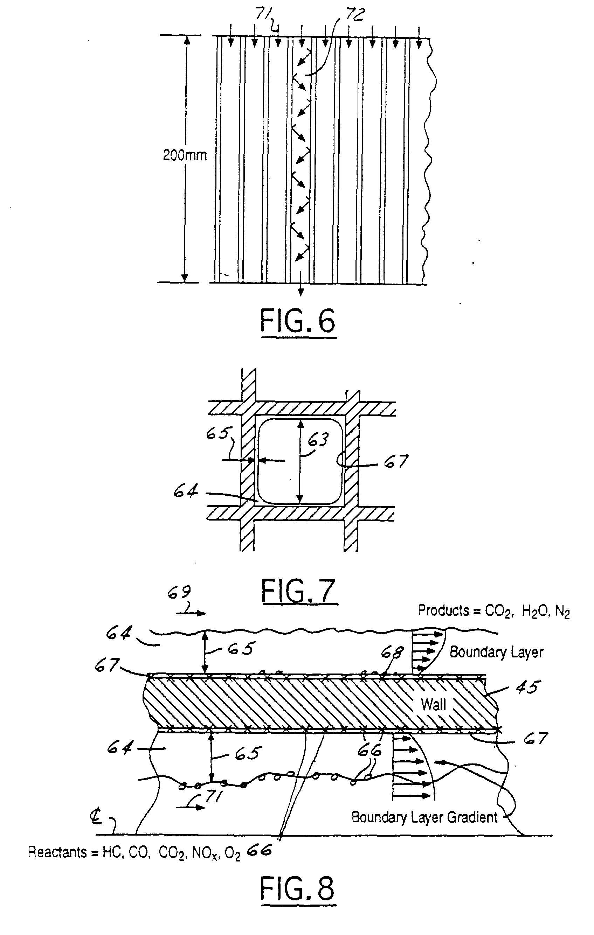

In conventional "channel flow", the exhaust gas flow 71 through the catalyst is of a high level laminar flow (see Figures 6-8). The back pressure of such flow is a function of the "hydraulic diameter" 63 of each channel, as shown in Figure 7 (a square channel cross-section is shown here schematically). When the flow rate is steady at constant engine speed, the thickness 65 of the boundary layer 64 is essentially constant; such thickness is a function of flow rate, gas temperature and channel dimensions and shape. The reactant and product gas molecules 66 (HC, CO, COₓ, O2, NOₓ, N₂ and H₂O) must diffuse through this boundary layer 64 to engage the reaction surface in the form of a coated catalyst crystallite surface 67 containing the catalyst. Similarly, reaction and product molecules 68 (H₂, O₂, CO₂, N₂, etc.) that do migrate through the walls 45 must diffuse from such walls into the adjacent gas stream 69 by working through the boundary layer 70 that is along the other channel. The molecular diffusion rates and reactions are a function of "impingement frequency" 72 which is related to gas temperature and the hydraulic diameter for laminar flow. Conventional catalysts unfortunately cannot have the channel cross-sectional cell size small enough to promote greater impingement due to limitations in fabricating such smaller channels. Fortunately, such fabrication limitation is not a restriction for this invention because of the use of special pellets.

For this invention, flow cannot proceed essentially as laminar; it proceeds through an undulating, tortuous and labyrinthian path (see Figure 5). The gas molecules are forced to increase their impingement frequency against the surfaces defining the flow path; such flow is referred herein as Darcy and the surfaces 78, 77 defining such flow are Darcy flow surfaces. If the Darcy flow surfaces are coated with reaction promoting materials, the reaction rates will be governed essentially by the cross-sectional size of the interstitial spaces 62 causing the flow to be Darcy. The cross-sectional flow size is commensurate with the average width of the interstitial spaces. Flow through the porous walls 45 is restricted preferably to the pore size range of 5-65 microns.

The distribution or randomness of the pellet shapes as well as the connected pores in the walls creates an undulating path. These flows can be characterised as a Darcy flow where the resulting flow back pressure is increased, but the gaseous reaction rates are 2 to 3 orders of magnitude higher, which more than offsets any disadvantage arising from the higher back pressure. This invention uniquely creates such Darcy flow not only through the walls defining the channels but also, and more importantly, within the interior of the channels of the substrate 41 containing the pellets. The invention combines the advantages of (i) the higher reaction rate due to the Darcy flow created by use of the packed pellets in the channels causing increased frequency of impingement, (ii) increased reaction surface area exposed to the gas necessitating a lower precious metal loading, and (iii) a modified boundary-layer in the laminar flow which may be reduced to a negligible thickness, thereby permitting faster migration or diffusion of impinging gas molecules to reach the reaction surfaces. This design combination provides design flexibility and reaction specificity.

The arrangement of the pellets 55, as shown in Figure 3, shows that the pellets will contact the walls of the channels at only side contact points 73 leaving a considerable portion of the remaining walls to induce a modified laminar flow. The Darcy flow in the channels is further profoundly enhanced by the porosity of hollow pellets whereby the flow not only must progress around and between the pellet exterior and walls 45 (interstitial spaces 62) but will progress through the pores 61 to enter into the interior 79 of the pellets and exit by other pores 61 of such pellets.

The overall combination of dolomitic carbonate as a NOₓ absorber/adsorber and the Darcy flow results in significant enhancement in conversion of NOₓ in a lean burn engine exhaust at considerably reduced precious metal loading requirements. The chemical reactions that take place in the exhaust with this type of purification device can function without staging or special engine control which has heretofore been required, such as moving from a lean engine exhaust condition to a rich engine exhaust condition to induce conversion of NOₓ, CO, and HC. This invention allows the chemical reaction to take place on a continuous or semi-continuous basis without frequent throttling or without the need to stage from lean to rich conditions.

In operation and at cold-start, the electrically heated mesh permits exhaust gas light-off to take place, initiating hydrocarbon and carbon monoxide conversion within seconds of the start. Since the engine exhaust start is considerably rich, very little NOₓ is produced. Pellet exterior surfaces 77 and through-wall porous surfaces 78 will absorb/adsorb excess HC in the exhaust due to the much cooler gas temperatures and the lack of availability of NOₓ. The heated exhaust gases enter the substrate and undergo high frequency impingement against the entrance walls as well as high frequency impingement against the increased surface area of the pellets. The additional surface area provided by the pellets and the significantly increased impingement frequency against the channel walls cause the catalyst conversion efficiency to be vastly improved and thereby reduce the amount of precious metal needed to effect such conversion.

In such early stages of heat-up or engine start-up, the initial reactions will be much like those in a conventional three-way catalyst. However, once lean burn conditions are attained, the dolomitic carbonate pellets function in a very unique manner to provide high conversion efficiency of the NOₓ as well as HC and CO.

Dolomitic carbonate, in the pellets, function to absorb/adsorb NOₓ which reacts with oxygen and the dolomitic carbonate in the presence of platinum or palladium to form nitrites and CO₂ or H₂O and CO₂. The nitrites then react with CO or HC and O₂ in the exhaust gas to again form carbonates (promoted by the Darcy flow) as well as some nitrates promoted by the laminar flow (see Table I). Thus, even in a continuous oxygen rich exhaust, there is a three-way cleansing of the exhaust by use of the present invention. CO and HC react to reduce nitrites to N₂ and H₂O and formation of more carbonates which started the reaction. Only a minor proportion of the nitrites react with oxygen to form nitrates which will require an oxygen recession in the exhaust to be reduced by CO, HC to CO₂, N₂, and H₂O. Thus, the NOₓ conversion is not dependent on the bulk content of the exhaust, but the devices of the Toyota patents referred to above are so dependent because a high combustion temperature is needed to supply sufficient CO to convert NOₓ which can only be reliably attained by such devices at richer fuel conditions. The embodiment of this invention uses carbonates which need only a small amount of CO to carry out conversion reactions even at low engine temperatures.

**TABLE I**

| The Reactions governing the NOₓ conversion process involving Dolomite: | |
|---|---|
| 1. | With Oxygen Rich Exhaust: (the reactions shown not balanced just to illustrate the mechanism) . |
| | CaCO₃ + 0₂ + 2NOₓ + (Pt or Pd - reaction surface) = Ca (NO₂)2 + CO₂ |
| | [also CaCO₃ + H₂O + 2NOₓ + (Pt or Pd - reaction surface) = Ca (NO₂)2 + H₂ CO₃ H₂ CO₃ + (Pt or Pd - reaction surface = CO₂ + H₂0] |
| | Ca(NO₂)2 + 0₂ + (Pt or Pd - reaction surface) = Ca(NO₃)2 |
| | Ca(NO₂) 2 + CO + CO₂ + (Pt or Pd reaction surface) *Promoted by Darcy Flow =* Ca(CO₃)2 + CO₂ + N₂ |
| | Ca(NO₂)2 + (HC)y + 0₂ + (Pt or Pd reaction surface) *Promoted by Darcy Flow =* Ca(CO₃)2 + CO₂ + H₂O = N₂ |
| | *With* Mg(CO₃)2, the *reactions are identical since the same mechanism is proposed.* |

| 2. | With Oxygen Deficient Exhaust: The reactions are not unlike those with Conventional 3-Way Catalyst, eg. |
|---|---|
| | CaCO₃ + HC + NOₓ + CO + Precious Metal Surface = Ca(NO₃)2 + CO₂ +CO + HC |
| | Ca(NO₃)2 + CO₂ + CO + HC + Precious Metal Surface = CaCO₃ + H₂O + CO₂ +N₂ |

Dolomite is a naturally occurring solid solution of CaCO₃, and MgCO₃ and as such does not contain any free MgO and/or CaO unless calcined at a temperature well above 1500°F (850°C). Also, when calcined, the calcined dolomite becomes a CaO-MgO solid solution with reaction characteristics significantly different from either pure CaO or MgO or the mechanical mixture of the two as used in prior art catalyst systems. Also, these solid solutions possess the affinity for ion exchange with stronger acid radicals such as SO₃, SO₄, NO₃, etc., even in the presence of water vapour and CO₂ in gaseous environments such as exhaust gases. This particular characteristic of the carbonates in solid solution is an underlying key element of the present invention to achieve significant reduction of NOₓ from the internal combustion engine exhaust as explained by the chemical reactions. The compounds so-formed, particularly the nitrites and the nitrates, readily oxidise the CO and HC in the proximity or presence of a precious metal catalyst such as palladium or platinum, as evidenced from the test results presented here. The process is augmented by in situ CO, which is always present; the corresponding ion exchange results in carbonates being formed again to yield continuous/semi-continuous removal of NOₓ without the need to have a rich-lean engine regime or operation which requires frequent throttling of the engine.

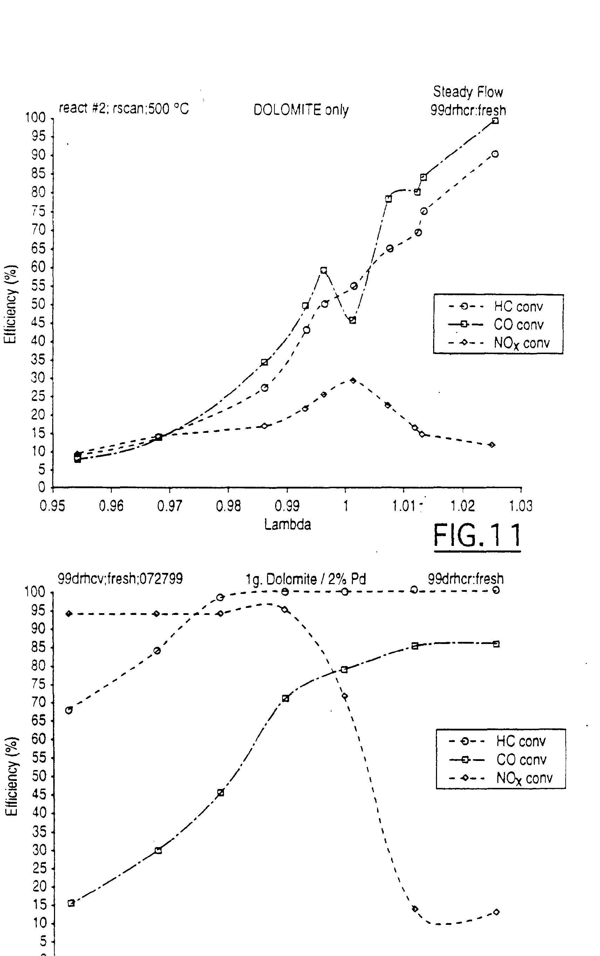

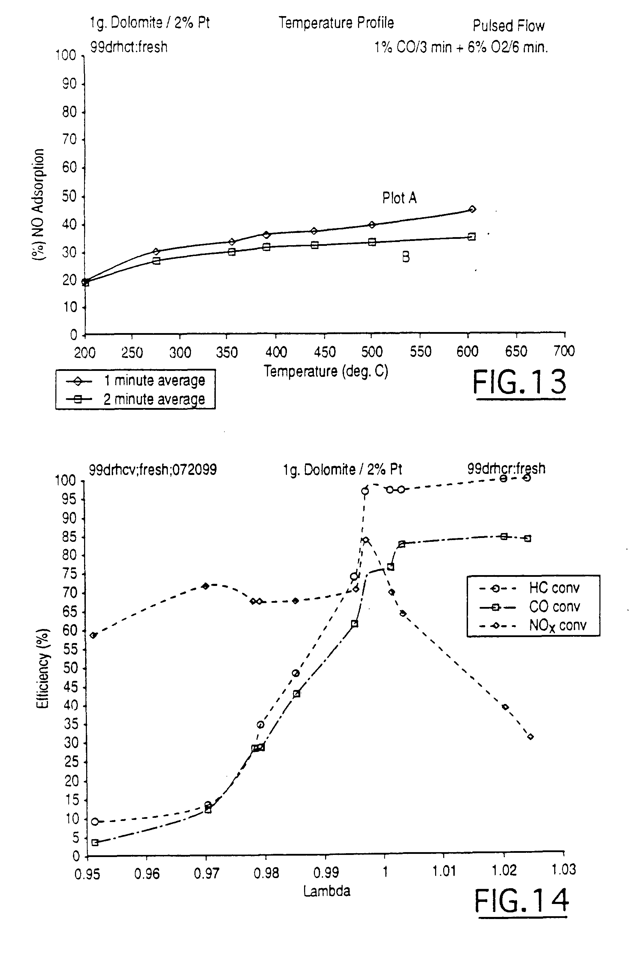

The chemical reactions governing the NOₓ conversion process involving dolomite, when the engine exhaust conditions have an oxygen deficiency, is shown in Figure 11. The chemical reactions, governing NOₓ conversion involving dolomite with a 2% loading of Palladium when the exhaust gas has excess oxygen is shown in Figure 12.

Figure 13 illustrates how dolomite with 2% platinum catalyst is effective in absorbing NOₓ on a relatively continuous basis as a function of temperature. The temperature plot is for pulsed engine exhaust flow that is changed from excess O₂ (6% O₂ for six minutes) to a deficiency in oxygen for one minute (plot A), and temperature for an exhaust flow that is changed from excess oxygen (6% O₂ for six minutes) to an oxygen deficiency for two minutes (plot B). The reason such absorption/adsorption is continuous or at a minimum semi-continuous results from the high conversion efficiency.

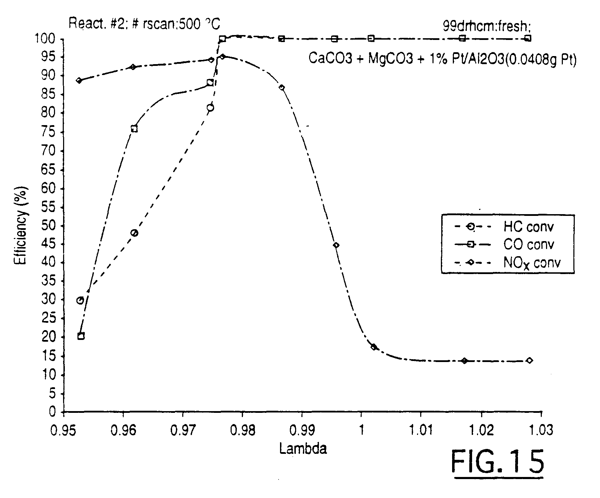

Figures 13 and 14 illustrate the conversion efficiency of NOₓ, HC, and CO as a function of lambda. Lambda is defined herein as the inverse of air/fuel ratio where stoichiometry is defined as 2=1.0 (i.e. x<1.0 means "rich" and >1.0 means lean or excess oxygen). The purification device was tested at steady flow and employed dolomite with a 2% loading of platinum in Figure 14; the purification device employed a 1% platinum loading (Figure 15). These Figures demonstrate that dolomite with platinum is highly effective in reducing exhaust components at moderately lean exhaust conditions as well as at stoichiometric conditions without the need for pulsing to a rich condition.

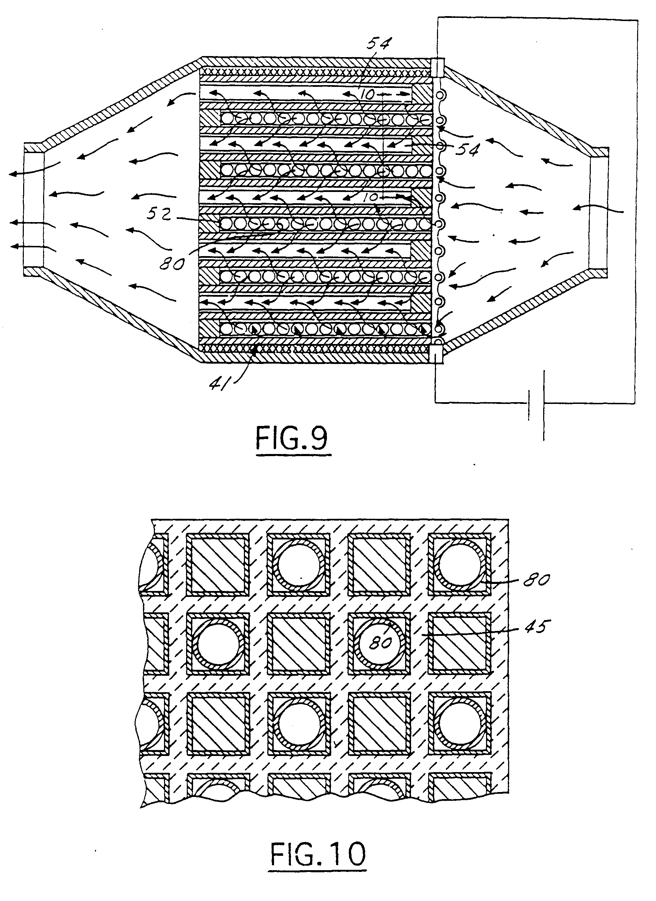

As shown in Figures 9 and 10, the purification device may be modified to contain porous hollow dolomite pellets 80 only in the entrance channels 52, the pellets being formed as regular spheres whereby the exhaust flow is required to migrate through a tortuous path defined by the spherical surfaces causing the gas molecules to repeatedly impinge on the entrance channel walls and boundary layer thereon. This type of construction encourages slightly more laminar flow in the entrance channels than the construction in Figures 2 and 3. Such construction provides a predominantly turbulent or diminished laminar flow in the exit channels 54, which flow maximises migration of gaseous elements through the reduced boundary layer of the exit channels. This type of construction is effective because every exit channel is fed through walls by four inlet channels, thus generating small turbulent eddies and increased impingement rates with the consequence being increased reaction rates.

This invention is particularly useful and adaptable to diesel engines which have an exhaust that is normally oxidising accompanied by high NOₓ emissions. Most of the NOₓ is formed during the first peak combustion spike of the engine combustion cycle and little opportunity is available thereafter to chemically reduce it. during the second or diffusion combustion state, little NOₓ is formed, but large amounts of oil and fuel saturated soot must be disposed of. With the device of this invention , such soot can be trapped in the inlet channels of the substrate and to some limited extent within the pores of the lateral flow porous walls 45 provided the pores are properly sized (i.e., 40-100 microns). The soot layer, along with the dolomitic carbonate coating on the Darcy flow surfaces 77, 78 and walls 45, will hold and absorb NOₓ compounds. The soot is ignited periodically during mild acceleration at engine speeds and loads that produce 550-600°F in the exhaust stream, provided the fuel injected during combustion contains elements such as cerium or copper which facilitate such temperatures. As the soot burns, NOₓ is released locally to be converted by the chemical reactions described above. At such time, the local atmosphere along the Darcy flow surfaces and walls 45 will have a reducing character which returns NOₓ to harmless water vapour and N₂ without the need for special purging.

## Claims

1. An exhaust purification device for fossil fuelled engines, comprising:
a series of adjacent alternately blocked laminar flow channels (42) defining inlet sections, exit sections and cross-flow sections therebetween, at least said cross flow section channels having porous foraminous walls (45) and a predetermined hydraulic diameter;
a plurality of NOₓ reducing pellets (55) occupying and packing at least certain of said inlet sections of said channels (42), said pellets (55) having a diameter generally approaching the hydraulic diameter of said channels (42), said pellets comprising or carrying dolomitic carbonate; and
a three-way catalyst coating (56) on at least the walls of said inlet or exit sections of said channels (42).

2. A device as claimed in claim 1, in which said pellets are porous and all carry dolomitic carbonate either in the calcined or non-calcined condition.

3. A device as claimed in claim 2, in which at least one of said channels and pellets carry a precious metal catalyst in a coating of less than 3 microns thickness and is effective in promoting conversion of noxious exhaust gaseous elements.

4. A device as claimed in claim 3, in which said precious metal loading is deposited by use of a 1-5% hydrofluoric acid solution to increase reactivity of said walls of said exit sections to accept and retain precious metal crystallites

5. A device as claimed in claim 1, in which the inlet sections and outlet sections are generally equal, the inlet sections forming a face which has a width generally the same as the length of said inlet sections.

6. An exhaust purification system for a lean burn internal combustion engine producing an exhaust with CO, HC and NOₓ, the engine having an air/fuel controller for providing a normal driving cycle between lean burn cruising with excess oxygen in the exhaust and regular acceleration with reduced excess oxygen, the system comprising:
an exhaust passage;
first walls promoting laterally interconnected inlet and outlet laminar flows in at least one region of the exhaust passage;
second walls, containing dolomitic carbonate, that promote Darcy flow within said first walls to reduce or eliminate the boundary layer induced by said laminar flows and promote Darcy flow within said lateral interconnection; and
a conversion catalyst on said first and second walls whereby, during a normal driving cycle with the exhaust gas first having normal lean burn excess oxygen, the second walls and dolomitic carbonate absorb/adsorb NOₓ for reaction with the exhaust gas to form nitrites and nitrates which in turn are reduced by available CO, O₂ or HC to form carbonates and innocuous compounds or elements, and secondly, when said exhaust gas has reduced excess oxygen, said first walls and catalyst function to reduce any available nitrates to again form carbonates and innocuous compounds or elements, such driving cycle having no need for artificially pulsing the controller to produce a temporary oxygen deficient exhaust condition.

7. A system as claimed in claim 6, in which said first walls are foraminous and have a porosity of 25-75%, said first walls defining parallel channels which are alternately blocked to induce laminar flow whereby the flow entering a blocked channel must pass laterally through the first walls to migrate to a plurality of adjacent unblocked channels in the form of a Darcy cross flow, and said second walls being formed as pellets packed into at least certain of said channels to create a labyrinth and tortuous path for the exhaust flow which completes the definition of the Darcy flow.

8. A system as claimed in claim 7, in which the pores within said first walls are in the range of 5-65 microns.

9. A system as claimed in claim 6, in which said conversion catalyst (i) is on said first walls defining said channels as well as within the pores of the said first walls, and (ii) is present in an amount of about 60 to 200 gm/ft³.

10. An exhaust purification system for a diesel engine, comprising:
(a) a plurality of alternately blocked laminar flow channels defining interconnected inlet sections, cross-flow section and exit sections, said flow channels being defined by porous foraminous walls having a predetermined hydraulic diameter with pores in the range of 40-100 microns;
(b) a plurality of NOₓ reducing pellets packing at least certain of the inlet sections of said channels, said pellets being porous and hollow and have a diameter generally approaching the hydraulic diameter of said channels to create Darcy flow surfaces effective to trap soot emitted by said diesel engine along with NOₓ; and
(c) a three-way catalyst coating said Darcy flow surfaces and channel walls whereby most NOₓ created during the first peak combustion spike of each diesel cycle is trapped in soot collected by said Darcy flow surfaces to thence be converted by said catalyst coating when said soot is later ignited and burned during normal engine accelerations that produce higher exhaust gas temperatures.
